# EUROPEAN PATENT APPLICATION

(11) **EP 2 574 380 A1**
(43) Date of publication of application: **03.04.2013**
(21) Application number: 12006347.4
(22) Date of filing: 10.09.2012
(51) Int. Cl.: A63F 13/00, A63F 13/10

(54) **Game device, method for controlling game device, program, and information storage medium**

(30) Priority: 27.09.2011 JP 2011210183
(71) Applicant: Konami Digital Entertainment Co., Ltd., Tokyo 107-8324 (JP)
(72) Inventor: Yamada, Kiyoshi, Tokyo 107-8324 (JP)
(74) Representative: Müller-Boré & Partner Patentanwälte

(57) **Abstract**

Dominated area setting means sets, for each of a plurality of game characters, in a game space, at least two of a first dominated area including a position of each of the plurality of game characters, a second dominated area including a position defined according to a position and representative direction of each of the plurality of game characters, and a third dominated area including a position defined according to a position and a movement direction of each of the plurality of game characters. Motion control means controls a motion of at least one of the plurality of game characters based on a positional relationship of a position related to the game character and at least two of the dominated areas mentioned above.

## Description

### BACKGROUND OF THE INVENTION

### 1. Field of the Invention

The present invention relates to a game device, a method for controlling the game device, a program, and an information storage medium.

### 2. Description of the Related Art

There has been known a game device for executing a game where a plurality of game characters move around in a game space.
In this game device, movements of the game characters are controlled in accordance with, for example, a predetermined algorithm. JP2004-321598A describes a technology for calculating a time at which each of game characters reaches each of areas set in a game space, and determining, based on the calculated time, a position to which each of the game characters moves, thereby controlling movements of the game characters.

### SUMMARY OF THE INVENTION

However, according to JP2004-321598A, the game space must be divided into a greater number of areas in order to achieve improved controllability of the operation of the game character. That is, a greater number of candidate areas to which the game characters move need to be prepared, and because of this, the arrival time of the game characters needs to be calculated for a greater number of the areas. As a result, the processing burden of the game device tends to increase.

One or more embodiments of the present invention have been conceived in view of the above, and an object thereof is to provide a game device, a method for controlling the game device, a program and an information storage medium for improving controllability of a motion of a game character while reducing processing burden of the game device.

In order to solve the above described problems, according to the embodiment of the present invention, there is provided a game device for executing a game where a plurality of game characters move around in a game space. The game device includes dominated area setting means for setting, for each of the plurality of game characters, in the game space, at least two of a first dominated area including a position of each of the plurality of game characters, a second dominated area including a position defined according to a position and a representative direction of each of the plurality of game characters, and a third dominated area including a position defined according to a position and a movement direction of the each of the plurality of game characters. The game device further includes motion control means for controlling a motion of at least one of the plurality of game characters based on a positional relationship between a position related to the at least one of the plurality of game characters and at least two of the first dominated areas, the second dominated areas, and the third dominated areas of other game characters.

According to the embodiment of the present invention, there is provided a method for controlling a game device which executes a game where a plurality of game characters move around in a game space. The method includes setting, for each of the plurality of game characters, in the game space, at least two of a first dominated area including a position of the each of the plurality of game characters, a second dominated area including a position defined according to a position and a representative direction of the each of the plurality of game characters, and a third dominated area including a position defined according to a position and a movement direction of the each of the plurality of game characters. The method further includes controlling a motion of at least one of the plurality of game characters based on a positional relationship between a position related to the at least one of the plurality of game characters and at least two of the first dominated areas, the second dominated areas, and the third dominated areas of other game characters.

According to the embodiment of the present invention, there is provided a program for causing a computer to function as a game device which executes a game where a plurality of game characters move around in a game space. The program causes the computer to function as dominated area setting means for setting, for each of the plurality of game characters, in the game space, at least two of a first dominated area including a position of the each of the plurality of game characters, a second dominated area including a position defined according to a position and a representative direction of the each of the plurality of game characters, and a third dominated area including a position defined according to a position and a movement direction of the each of the plurality of game characters. The program further causes the computer to function as motion control means for controlling a motion of at least one of the plurality of game characters based on a positional relationship between a position related to the at least one of the plurality of game characters and at least two of the first dominated areas, the second dominated areas, and the third dominated areas of other game characters.

According to the embodiment of the present invention, an information storage medium is a computer-readable information storage medium for storing the program.

According to the embodiment of the present invention, it is possible to improve controllability of a motion of a game character while reducing processing burden of the game device

According to the embodiment of the present invention, the motion control means controls a motion of at least one of the plurality of game characters based on a positional relationship between a position of the at least one of the game characters and at least two of the first dominated areas, the second dominated areas, and the third dominated areas of other game characters.

According to the embodiment of the present invention, the game is a sports game using a moving object, and the game device further includes means for associating one of the plurality of game characters with the moving object based on a positional relationship between positions of the plurality of game characters and a position of the moving object, and the motion control means controls a motion of the game character associated with the moving object based on a positional relationship between a position of the game character or a position of the moving object and at least two of the first dominated areas, the second dominated areas, and the third dominated areas of other game characters.

According to the embodiment of the present invention, the dominated area setting means includes means for obtaining information from means for storing information indicative of strength of a user or a computer, the user or the computer operating the game character, and means for changing sizes of at least two of the first dominated area, the second dominated area, and the third dominated area of the game character based on the information indicative of the strength of the user or the computer.

According to the embodiment of the present invention, the game is a sports game using the moving object, and the game device further includes means for associating one of the plurality of game characters with the moving object based on a positional relationship between positions of the plurality of game characters and a position of the moving object, and the dominated area setting means comprises means for gradually changing, based on a period of time elapsed since one of the plurality of game characters was associated with the moving object, sizes of at least two of the first dominated area, the second dominated area and the third dominated area of the each of the plurality of game characters.

According to the embodiment of the present invention, the game is a sports game in which a first team plays against a second team using a moving object, and the game device further includes means for associating one of the plurality of game characters and the moving object based on a positional relationship between positions of the plurality of game characters and a position of the moving object, and the dominated area setting means includes means for widening or narrowing at least two of the first dominated area, the second dominated area, and the third dominated area of each of the plurality of game characters such that the areas are wider or narrower in a case where the game character of the first team is associated with the moving object than in a case where the game character of the second team is associated with the moving object.

According to the embodiment of the present invention, the game is a sports game using a moving object, and the game device further includes means for associating one of the plurality of game characters and the moving object based on a positional relationship between positions of the plurality of game characters and a position of the moving object, and the dominated area setting means comprises means for widening or narrowing at least two of the first dominated area, the second dominated area, and the third dominated area of the each of the plurality of game characters such that the areas are wider or narrower in a case where an operation target of the user is associated with the moving object than in a case where the game character other than the operation target of the user is associated with the moving object.

According to the embodiment of the present invention, the dominated area setting means includes means for changing at least two of the positions of the first dominated area, the second dominated area, and the third dominated area of the each of the plurality of game characters based on a type of a motion of the each of the plurality of game characters.

According to the embodiment of the present invention, the game device further includesmeans for detecting a direction instruction operation of a user and means for evaluating a direction indicated by the direction instruction operation of the user based on a positional relationship between a position related to an operation target of the user and at least two of the first dominated areas, the second dominated areas, and the third dominated areas of other game characters and presenting the evaluation result to the user.

According to the embodiment of the present invention, the game device further includes means for detecting a direction instruction operation of a user and means for determining a direction that should be instructed or not be instructed by the direction instruction operation of the user based on a positional relationship between a position related to an operation target of the user and at least two of the first dominated areas, the second dominated areas, and the third dominated areas of other game characters and presenting to the user the direction that should be instructed or not be instructed.

### BRIEF DESCRIPTION OF THE DRAWINGS

In the accompanying drawings:
Fig. 1 is a diagram showing a hardware structure of a game device according to an embodiment of the present invention;
FIG. 2 is a diagram showing an example of a game space;
FIG. 3 is a diagram showing an example of a game screen displayed on a display unit;
FIG. 4 is a diagram showing the game space viewed from above a pitch (from a Yw-axis direction);
FIG. 5 is a functional block diagram showing functions implemented in the game device and related to the present invention;
FIG. 6 is a diagram illustrating how a surrounding area, a conscious area, and a reserved area are set;
FIG. 7 is a diagram illustrating evaluation target directions;
FIG. 8 is a diagram illustrating an evaluation method of evaluation target directions;
FIG. 9 is a diagram showing an example of data storage of evaluation result data;
FIG. 10 is a flow chart illustrating processing that the game device executes at predetermined intervals;
FIG. 11 is a flow chart illustrating processing that the game device executes at predetermined intervals;
FIG. 12 is a diagram illustrating an association between information on strength of a user or a computer and information indicative of sizes of surrounding area, conscious area, and reserved area;
FIG. 13 is a diagram illustrating an association between an elapsed time from the time when a player character possesses a ball and information indicative of sizes of surrounding area, conscious area, and reserved area;
FIG. 14 is a diagram illustrating an association between a team to which a player character in possession of a ball belongs and information indicative of sizes of surrounding area, conscious area, and reserved area;
FIG. 15 is a diagram illustrating an association between a player character in possession of a ball and information indicative of sizes of surrounding area, conscious area, and reserved area;
FIG. 16 is a diagram illustrating an association between types of motion of a player character and information on positions of surrounding area, conscious area, and reserved area;
FIG. 17 is a diagram illustrating how an evaluation result of a direction indicated by a user's direction instruction operation is presented;
FIG. 18 is a diagram illustrating how an evaluation result of an evaluation target direction is presented; and
FIG. 19 is a diagram illustrating an association between types of motion of a player character and information on the surrounding area, conscious area, and reserved area to be referred for evaluating an evaluation target direction.

### DETAILED DESCRIPTION OF THE INVENTION

### [1. Embodiment]

In the following, an example embodiment of the present invention will be described in detail with reference to the accompanying drawings. The game device according to the embodiment of the present invention is implemented by, for example, a consumer game machine (stationary game machine), portable game machine, mobile phone, personal digital assistant (PDA) or personal computer. In this example, the case of implementing the game device according to the embodiment by the consumer game machine will be described.

### [1-1. Hardware structure of game device]

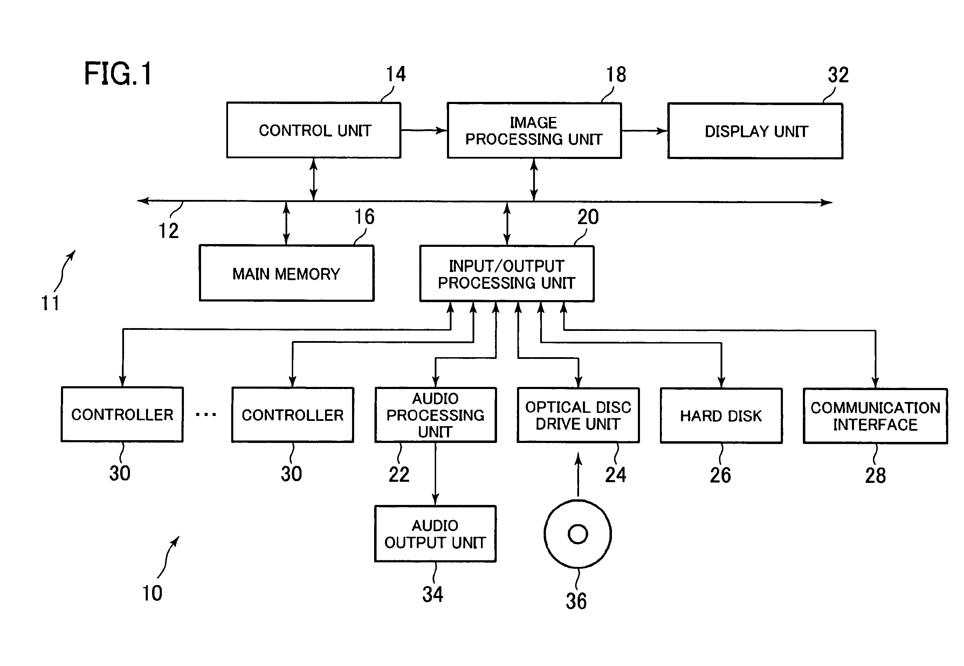

FIG. 1 illustrates a hardware structure of the game device according to the embodiment of the present invention. The game device 10 shown in FIG. 1 includes a consumer game machine 11, a display unit 32, an audio output unit 34, and an optical disc 36 (information storage medium).

The display unit 32 and the audio output unit 34 are connected to the consumer game machine 11. The display unit32 is, for example, a consumer television set or a liquid crystal display. The audio output unit 34 is, for example, speakers or headphones built into the consumer television set.

The consumer game machine 11 is a known computer game system. The consumer game machine 11 includes a bus 12, a control unit 14, a main memory 16, an image processing unit 18, an input/output processing unit 20, an audio processing unit 22, an optical disc drive unit 24, a hard disk 26, a communication interface 28, and a controller 30.

The control unit 14 includes one or more control units (e.g., CPU). The control unit 14 executes processing or information processing for controlling the portions of the consumer game machine 11 based on an operating system stored in a ROM (not shown) or a program read out from the optical disc 36.

The main memory 16 includes, for example, a RAM. The program or data read out from the optical disc 36 is written into the main memory 16. The main memory 16 is used as a working memory of the control unit 14. The bus 12 functions to exchange address or data between the portions of the consumer game machine 11.

The image processing unit 18 includes a VRAM. The image processing unit 18 draws a game screen on the VRAM based on image data supplied from the control unit 14. The game screen drawn on the VRAM is converted into a video signal and output to the display unit 32 at a predetermined time.

The input/output processing unit 20 is an interface for allowing the control unit 14 to access the audio processing unit 22, optical disc drive unit 24, hard disk 26, communication interface 28 and controller 30.

The audio processing unit 22 includes a sound buffer. The audio processing unit 22 outputs audio data, which is read out from the optical disc 36 to the sound buffer, from the audio output unit 34.

The communication interface 28 is an interface for connecting the consumer game machine 11 to a communication network, such as the Internet, via a wired or wireless connection.

The optical disc drive unit 24 reads a program or data stored in the optical disc 36. While this embodiment explains a case of using the optical disc 36 so as to provide the consumer game machine 11 with a program or data, other information storage media, such as a memory card, may be used to provide the consumer game machine 11 with a program or data. Alternatively, for example, a program or data may be provided to the consumer game machine 11 from remote places via a communication network.

The hard disk 26 is a conventional hard disk device (auxiliary storage device). In this embodiment, the program or data to be stored in the optical disc 36 may be also stored in the hard disk 26.

The controller 30 is an operation unit for a user to operate a game. For example, the controller 30 detects the direction instruction operation by the user. One or more controllers 30 are connected to the consumer game machine 11 in a wired or wireless manner. The input/output processing unit 20 scans a state of each of operating members of the controller 30 at predetermined intervals (e.g., every 1/60^{th} of a second). An operation signal indicative of the scanning result is fed into the control unit 14 via the bus 12. The control unit 14 determines a game operation of the user based on the operation signal. For example, the control unit 14 determines the direction instruction operation detected by the controller 30 based on the operation signal from the controller 30.

### [1-2. Game executed in game device]

The game device 10 executes a game where a plurality of game characters move around in the game space by running a game program read out from the optical disc 36. For example, a sport game where a first team plays against a second team using moving objects is executed.

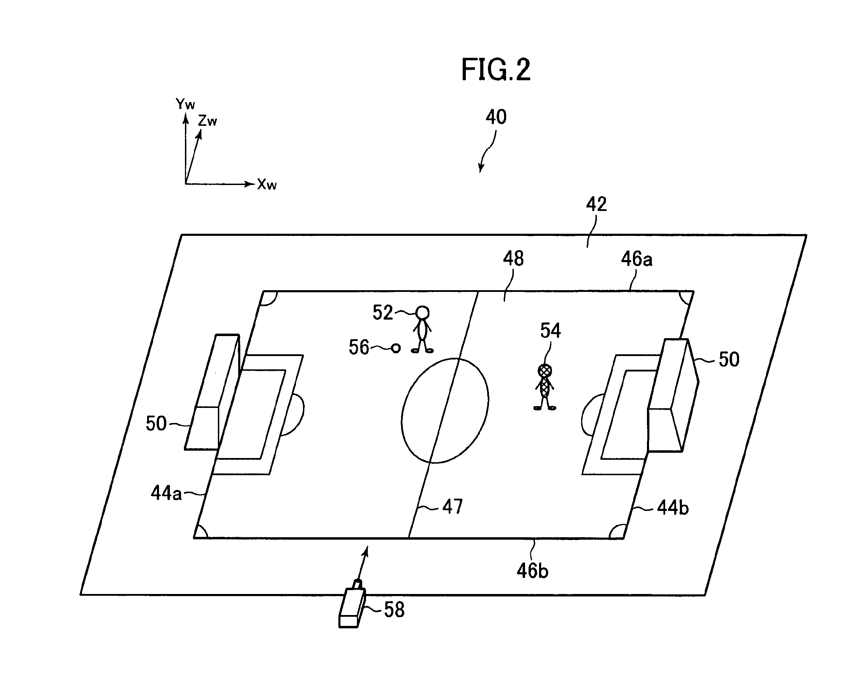

This embodiment explains a case of executing a soccer game to play a soccer match in which the game characters move around in the game space representing a soccer field. In this soccer game, a match is played between a team operated by a user (hereinafter "user team") and a team operated by an opponent (computer or another user) (hereinafter "opponent team"). When the soccer game begins, for example, the game space 40 shown in FIG. 2 is constructed in the main memory 16.

FIG. 2 illustrates an example of the game space 40. The game space 40 illustrated in FIG. 2 is a virtual three-dimensional space in which three coordinate axes (Xw-axis, Yw-axis, and Zw-zxis) are orthogonal to one another. As shown in FIG. 2, a field 42, which is an object represents a soccer field, is placed in the game space 40.

The field 42 has two goal lines 44a and 44b, two touchlines 46a and 46b, and a center line 47. The match is played on a pitch 48, which is enclosed by two goal lines 44a and 44b and two touchlines 46a and 46b, and areas around the pitch 48.

On the field 42, there are arranged objects including goals 50 representing soccer goals, player characters 52 representing soccer players (game characters) belonging to the user team, player characters 54 representing soccer players belonging to the opponent team, and a ball 56 representing a soccer ball. A position of each object is specified by, for example, a three-dimensional coordinate of a world coordinate system (Xw-Yw-Zw coordinate system).

When a player character 52 (54) and a ball 56 move towards each other, those player character 52 (54) and ball 56 are associated with each other under the predetermined conditions. In this case, a moving action of the player character 52 (54) is a dribble action. In the following, the state in which the player character 52 (54) is associated with the ball 56 is described as "the player character 52 (54) in possession of the ball 56."

For example, the user can operate one of the player characters 52 of the user team. Further, the player characters 52 (54) that are placed in the game space 40 and are not included in user's operation target act autonomically in accordance with the predetermined behavior algorithm.

On the field 42, there are arranged eleven player characters 52 of the user team and eleven player characters 54 of the opponent team, which have been omitted from FIG. 2.

A virtual camera 58 (point of view) is set up in the game space 40. The display unit 32 displays the game space 40 viewed from the virtual camera 58 on the game screen.

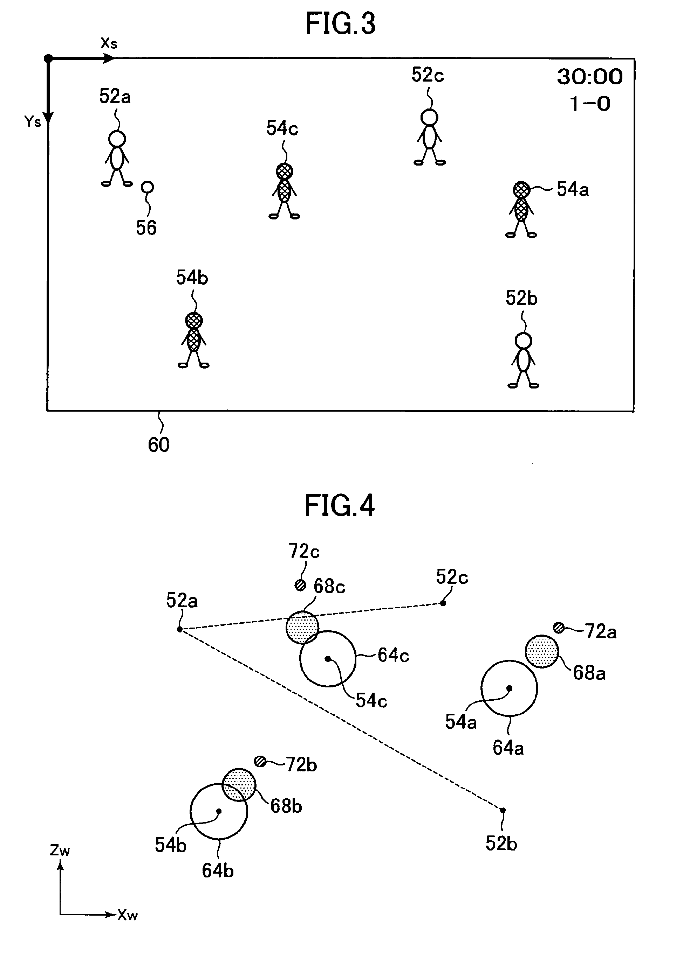

FIG. 3 illustrates an example of the game screen 60 displayed on the display unit 32. The game screen 60 shown in FIG. 3 includes three player characters 52a, 52b, and 52c belonging to the user team, three player characters 54a, 54b, and 54c belonging to the opponent team, and the ball 56.

The game screen 60 is generated by coordinate-transforming vertex coordinates of respective objects placed in the game space 40 from the world coordinate system into the screen coordinate system using the predetermined coordinate transformation calculation. As shown in FIG. 3, the screen coordinate system is a two-dimensional coordinate system in which, for example, the origin O is defined by the left corner of the game screen 60, the Xs-axis positive direction is defined by the right direction from the origin O, and the Ys-axis positive direction is defined by the down direction from the origin O.

In this embodiment, for example, as shown in FIG. 3, when a player character 52a of the user team is in possession of the ball 56, the player character 52a acts based on a positional relationship between the position of the player character 52a and a plurality of dominated areas set for the player characters 54 of the opponent team.

FIG. 4 is a diagram showing the game space 40 viewed from above the pitch 48 (from the Yw-axis direction). FIG. 4 shows the dominated areas set for the player characters 54 when the player character 52a is in possession of the ball 56. For simplicity, only player characters 54a, 54b, and 54c included in the dominated areas in the game screen 60 in FIG. 3 have been illustrated in FIG. 4.

In this embodiment, when the player character 52 of the user team is in possession of the ball 56, three dominated areas are set for each of player characters 54 of the opponent team. On the other hand, when the player character 54 of the opponent team is in possession of the ball 56, three dominated areas are likewise set for each of player characters 52 of the user team. In the following, the three dominated areas set for the player characters 52 (54) are referred to as a surrounding area 62 (64), a conscious area 66 (68), and a reserved area 70 (72), respectively.

As shown in FIG. 4, the surrounding areas 64 are the possible ranges of movement of the player characters 54a, 54b, and 54c within the predetermined time period (e.g., 1 second). The conscious areas 68 are the areas which, for example, the player characters 54a, 54b, and 54c are especially conscious of. The reserved areas 72 are the areas that are reserved as destinations of the player characters 54a, 54b, and 54c.

For example, the player character 52a in possession of the ball 56 is controlled to dribble or pass the ball 56 in the direction in which the surrounding areas 64, conscious areas 68, and reserved areas 72 of the player characters 54a, 54b, and 54c do not overlap one another in the game space 40.

In the example shown in FIG. 4, for example, a straight line that connects the player character 52a and the player character 52c intersects with the conscious area 68c, and thus a pass from the player character 52a to the player character 52c is highly likely to be intercepted by the player character 54c. On the other hand, a straight line that connects the player character 52a and the player character 52b does not intersect with any of the dominated areas, and thus a pass from the player character 52a to the player character 52b may not be intercepted. Accordingly, for example, the player character 52a is controlled to pass the ball to the player character 52b.

As mentioned above, in this embodiment, a player character 52 in possession of the ball 56 is controlled to move based on the surrounding areas 64, conscious areas 68, and reserved areas 72 of the player characters 54 belonging to a different team to that of the player character 52, thereby reducing processing burden of the game device 10 and improving the controllability of the player character 52. A detailed description of this technology is given below.

### [1-3. Functions implemented in game device]

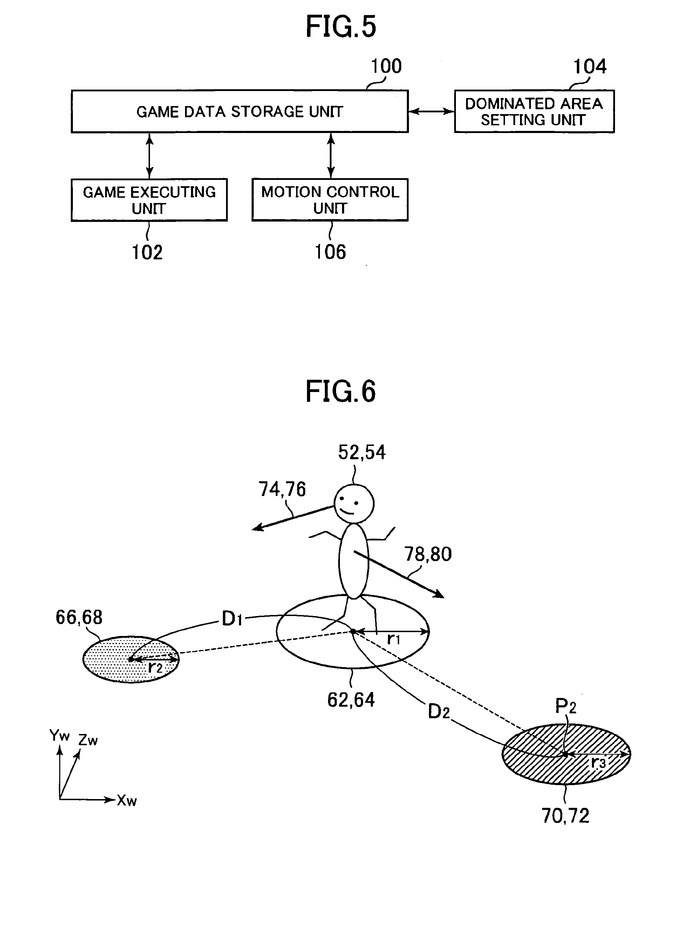

FIG. 5 is a functional block diagram showing functions implemented in the game device and related to the present invention. As shown in FIG. 5, the game device 10 includes a game data storage unit 100, a game executing unit 102, a dominated area setting unit 104, and a motion control unit 106.

### [1-3-1. Game data storage unit]

The game data storage unit 100 is mainly constructed by, for example, the main memory 16 and the optical disc 36. The game data storage unit 100 stores, for example, data necessary for executing a soccer game. For example, the game data storage unit 100 stores game situation data, which indicates the current situation of the soccer game.

For example, the game situation data includes the following data:
(1) data indicative of the current situation (e.g., position, line of sight, front direction of face, front direction of body, destination, and moving speed) of each of player characters 52 (54)
(2) data indicative of the current situation (e.g., position, destination and moving speed) of the ball 56
(3) data indicative of the player character 52 (54) in possession of the ball 56
(4) other data indicative of the current situation of the virtual camera 58 (e.g., position and line of sight) and the situation of the match (e.g., scores of both teams and elapsed time)

In this embodiment, the game data storage unit 100 stores information for identifying the positions of the surrounding areas 62 (64), conscious areas 66 (68), and reserved areas 70 (72) set in the game space 40. For example, the game data storage unit 100 stores the three-dimensional coordinates included in the surrounding areas 62 (64), conscious areas 66 (68), and reserved areas 70 (72), and three-dimensional coordinates of the boundaries of the surrounding area 62 (64), conscious area 66 (68), and reserved areas 70 (72).

Note that data stored in the game data storage unit 100 is not to be limited to the above described example. For example, the data may include parameters indicative of abilities of player characters 52 (54), and, in a case where an opponent is a computer, strength of the computer. Alternatively, evaluation result data described later may be stored.

### [1-3-2. Game executing unit]

The game executing unit 102 is implemented mainly by the control unit 14. The game executing unit 102 executes a game based on a game program. For example, the game executing unit 102 executes the game by updating content stored in the game data storage unit 100 based on the game program.

The game executing unit 102 functions, for example, to obtain data stored in the game data storage unit 100. In addition, the game executing unit 102 functions to update data stored in the game data storage unit 100. Further, the game executing unit 102 functions to display the game screen 60 on the display unit 32.

For example, the game executing unit 102 functions to associate one of a plurality of game characters (e.g., player characters 52 (54)) with a moving object (for example, ball 56) based on the positional relationship between the positions of the game characters and the position of the moving object. When a distance between a player character 52 (54) and a ball 56 falls within a predetermined distance, for example, the game executing unit 102 associates the player character 52 (54) with the ball 56.

### [1-3-3. Dominated area setting unit]

The dominated area setting unit 104 is implemented mainly by, for example, the control unit 14. The dominated area setting unit 104 sets, for each of a plurality of game characters (e.g., player characters 52 (54)), at least two of the following in the game space 40: a first dominated area (e.g., surrounding area 62 (64)) including a position of the game character; a second dominated area (e.g., conscious area 66 (68)) including a position defined by the position and representative direction of the game character; and a third dominated area (e.g., reserved area 70 (72)) including a position defined by the position and movement direction of the game character.

FIG. 6 is a diagram illustrating how the surrounding area 62 (64), conscious area 66 (68), and reserved area 70 (72) are set. As shown in FIG. 6, for example, an area within a circle centered at the current position of the player character 52 (54) and having a predetermined radius r₁ is defined as the surrounding area 62 (64) of the player character 52 (54).

The surrounding area 62 (64) is used for determining the motion of the player character 52 (54). For example, when the player character 52 in possession of the ball 56 enters the surrounding area 64 of the player character 54 of the opponent team, the player character 54 approaches the player character 52 in possession of the ball 56 so as to take the ball. In addition, for example, when the player character 52 in possession of the ball 56 passes the ball, and a straight line extending from the position of the ball 56 towards the movement direction of the ball enters the surrounding area 64 of the player character 54 of the opponent team, the player character 54 approaches the ball 56 so as to intercept the pass.

For example, an area within a circle centered at a position P₁, which is away from the current position of the player character 52 (54) to the representative direction 74 (76) of the player character 52 (54) by a predetermined distance D₁, and having the predetermined radius r₂, is defined as the conscious area 66 (68) of the player character 52 (54). The representative direction 74 (76) of the player character 52 (54) is a direction of a sight line, front of the face, or front of the body of the player character 52 (54). Information indicative of the representative direction 74 (76) is stored in the game situation data, and the direction is changed as appropriate according to the game program.

Further, for example, a circle centered at a position P₂, which is away from the position of the player character 52 (54) in the movement direction 78 (80) of the player character 52 (54) by a predetermined distance D₂, and having the predetermined radius r₃, is defined as the reserved area 70 (72) of the player character 52 (54). The movement direction 78 (80) is stored in the game situation data, and the direction is changed as appropriate according to the game program.

Similarly to the surrounding area 62 (64), the conscious area 66 (68) and the reserved area 70 (72) are used for determining the motion of the player character 52 (54). That is, when the player character 52 (54) in possession of the ball 56 or the straight line extending from the position of the ball 56 in the movement direction of the ball enter the conscious area 66 (68) or the reserved area 70 (72), the player character 52 (54) is controlled to take the ball 56 or intercept the pass.

In this embodiment, all of the surrounding area 62 (64), conscious area 66 (68), and reserved area 70 (72) are set in the game space 40, but it is also possible for two or three of these areas to be set in the game space 40.

How to define the surrounding area 62 (64), conscious area 66 (68), and reserved area 70 (72) is not limited to the example shown in FIG. 6. The surrounding area 62 (64), conscious area 66 (68), and reserved area 70 (72) may be respectively defined according to the position of the player character 52 (54), the position and representative direction 74 (76) of the player character 52 (54), and the position and movement direction 78 (80) of the player character 52 (54). For example, the size of the respective surrounding area 62 (64), conscious area 66 (68), and reserved area 70 (72) may be varied for each of the player characters 52 (54), or may be the same.

In addition, the surrounding area 62 (64), conscious area 66 (68), and reserved area 70 (72) may be set based on the position or movement direction of the ball 56. For example, the surrounding area 62 (64), conscious area 66 (68), and reserved area 70 (72) are placed to stretch out in a direction from the position of the player character 52 (54) to the position of the ball 56. In this case, it is possible to make the player character 52 (54) move with the direction of the ball 56 in mind.

For example, a greater distance between the position of the player character 52 (54) and the position of the ball 56 is associated with a larger size of the surrounding area 62 (64), conscious area 66 (68), and reserved area 70 (72). In this case, since the further the ball 56 is away from the player character 52 (54) the longer it takes the ball 56 to come close to the player character 52 (54), it is possible to reflect a range in which the player character 52 (54) can move to determine the sizes of these areas.

In addition, for example, the surrounding area 62 (64), conscious area 66 (68), and reserved area 70 (72) are placed to stretch out in the movement direction of the ball 56. In this case, it is possible to make the player character 52 (54) move with the movement direction of the ball 56 in mind.

### [1-3-4. Motion control unit]

The motion control unit 106 is implemented mainly by, for example, the control unit 14. The motion control unit 106 controls a motion of at least one of the game characters (e.g., player character 52 (54)) based on a positional relationship among the position related to the at least one of the plurality of game characters and at least two of the first dominated areas (e.g., surrounding areas 62 (64)), second dominated areas (e.g., conscious areas 66 (68)), and third dominated areas (e.g., reserved areas 70 (72)) of other game characters.

The position related to the player character 52 (54) is a position of the player character 52 (54) when the player character 52 (54) is not in possession of the ball 56, and a position of the player character 52 (54) or the ball 56 when the player character 52 (54) is in possession of the ball 56. Here, a case is explained where the position related to the player character 52 (54) is a position of the player character 52 (54). In the following descriptions regarding the player character 52 (54) that is controlled by the motion control unit 106, "position of the player character 52 (54) " may be replaced with "position of the ball 56."

In this embodiment, a case is explained where the motion control unit 106 controls a motion of the game character (e.g., player character 52 (54)) associated with the moving object (e.g., ball 56) based on a positional relationship among the position of the game character or the moving object and at least two of the first dominated area (e.g., surrounding area 62 (64)), second dominated area (e.g., conscious area 66 (68)), and third dominated area (e.g., reserved area 70 (72)) of another game character. For example, the motion of the player character 52a in possession of the ball 56 is controlled based on the surrounding areas 62 (64), conscious areas 66 (68), and reserved areas 70 (72) of the player characters 54 of the opponent team.

For example, an evaluation target direction for determining the motion of the player character 52a is set for the player character 52a in possession of the ball 56. The evaluation target direction is a direction for determining, for example, the movement direction of the player character 52a or the movement direction of the ball 56, and set for, for example, an Xw-Zw plane to which the player character 52a moves.

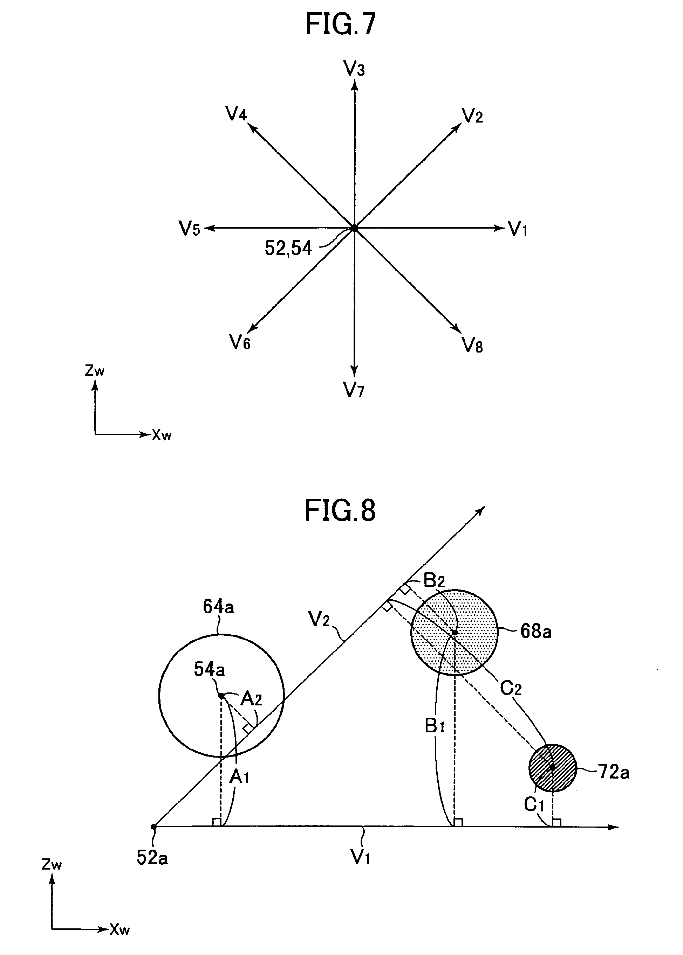

FIG. 7 illustrates the evaluation target directions. As shown in FIG. 7, this embodiment describes a case where the evaluation target directions extend from the position related to the player character 52a in k directions (k is a natural number, here k=8). For example, the player character 52a or the ball 56 move in any of these eight evaluation target directions. That is, for example, the player character 52a dribbles or passes the ball 56 in any of the eight evaluation target directions.

For example, the evaluation target directions V₁-V₈ are evaluated by determining whether or not a straight line extending from the position of the player character 52a in the evaluation target directions V₁-V₈ is included in at least one of the surrounding area 62 (64), conscious area 66 (68), and reserved area 70 (72), each corresponding to the player character.

FIG. 8 illustrates an evaluation method of the evaluation target directions V₁-V₈. In FIG. 8 only the evaluation method for the evaluation target direction V₁ and the evaluation target direction V₂, among the evaluation target directions V₁-V₈, is illustrated for simplicity.

In order to evaluate the evaluation target direction V₁, for example, the shortest distance A₁ between the evaluation target direction V₁ and the surrounding area 64a, the shortest distance B₁ between the evaluation target direction V₁ and the conscious area 68a, and the shortest distance C₁ between the evaluation target direction V₁ and the reserved area 72a are calculated.

The evaluation target direction V₁ is evaluated by determining, for example, whether or not the evaluate distance A₁ is equal to or less than the distance r₁, the distance B₁ is equal to or less than the distance r₂, or the distance C₁ is equal to or less than the distance r₃. For example, if the distance A₁ is greater than the distance r₁, or the distance B₁ is greater than the distance r₂, or the distance C₁ is greater than the distance r₃, the evaluation target direction V₁ receives a given evaluation point value (for example, 10 points).

Next, in order to evaluate the evaluation target direction V₂, for example, the shortest distance A₂ between the evaluation target direction V₂ and the surrounding area 64a, the shortest distance B₂ between the evaluation target direction V₂ and the conscious area 68a, and the shortest distance C₂ between the evaluation target direction V₂ and reserved area 72a are calculated.

The evaluation target direction V₂ is evaluated by determining, for example, whether or not the distance A₂ is equal to or less than the distance r₁, the distance B₂ is equal to or less than the distance r₂, or the distance C₂ is equal to or less than the distance r₃. For example, if the distance A₂ is greater than the distance r₁, or the distance B₂ is greater than the distance r₂, or the distance C₂ is greater than the distance r₃, the evaluation target direction V₂ receives a given evaluation point value (for example, 10 points).

The evaluation mentioned above is also performed for the surrounding area 64, conscious area 68, and reserved area 72 of other player characters 54 besides the player character 54a. In FIG. 8, the evaluation target directions V₁ and V₂ are illustrated. Note that other evaluation target directions V₃-V₈ are evaluated in a similar way.

This embodiment describes a case where the game data storage unit 100 stores evaluation result data indicating the evaluation results of the evaluation target directions V₁-V₈ that have been evaluated as stated above.

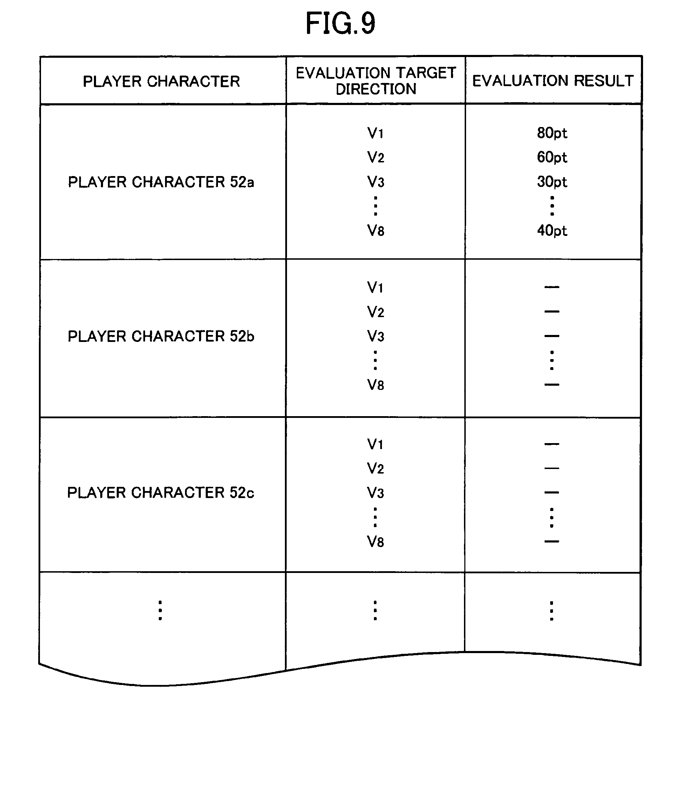

FIG. 9 shows an example of data storage of the evaluation result data. As shown in FIG. 9, for example, player characters 52 (54), evaluation target directions V₁-V₈, and evaluation results of the respective evaluation target directions V₁-V₈ are associated with one another and stored. The following describes a case of storing evaluation points given to each of evaluation target directions V₁-V₈ as evaluation result data. For example, a higher value of the evaluation point of the evaluation target directions V₁-V₈ indicates that a lower number of other player characters 52 (54) are located in the evaluation target directions V₁-V₈.

In this embodiment, the evaluation target directions V₁-V₈ set for a player character 52 (54) in possession of the ball 56 are evaluated, and thus only the evaluation results associated with this player character 52 (54) are stored in the evaluation result data.

The motion control unit 106 controls the motion of the player character 52 (54) in possession of the ball 56 based on, for example, among the evaluation target directions V₁-V₈, the directions which do not intersect with the surrounding area 62 (64), conscious area 66 (68), and reserved area 70 (72). That is, the motion of the player character 52 (54) is controlled based on the direction having the highest evaluation point value of the evaluation target directions V₁-V₈. The motion control unit 106 moves the player character 52 (54) or the ball 56 in any of the evaluation target directions V₁-V₈ based on, for example, the evaluation results of the evaluation target directions V₁-V₈.

### [1-4. Processing executed in game device]

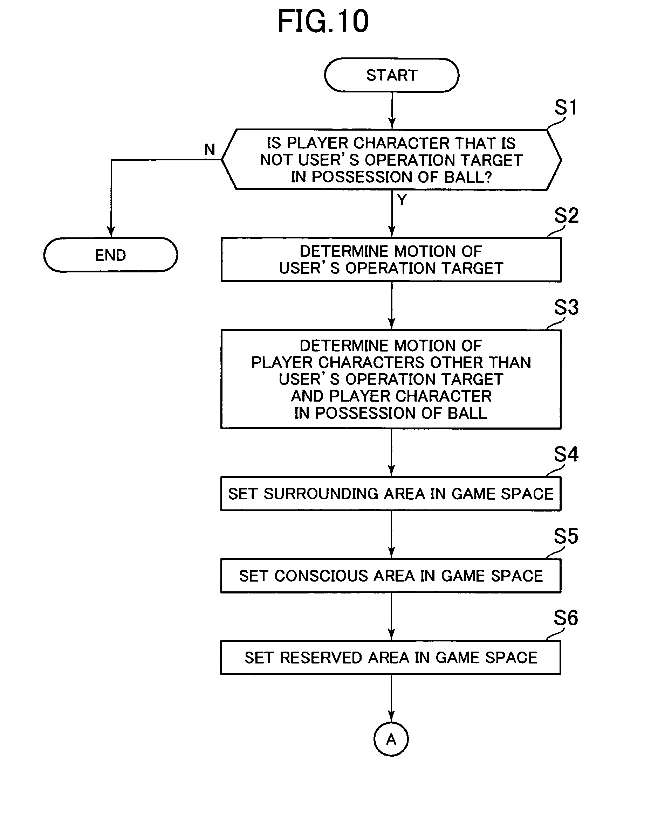

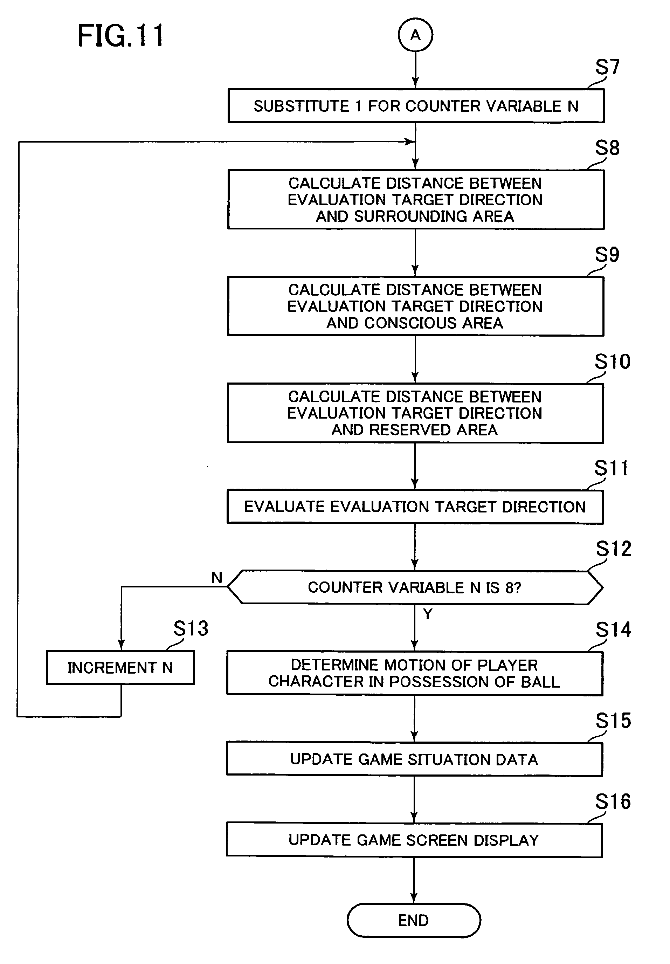

Next, processing executed in the game device 10 will be explained. FIGs. 10 and 11 are flow charts illustrating processing that the game device 10 executes at predetermined intervals. The control unit 14 executes the processing shown in FIGs. 10 and 11 according to a program stored in the optical disc 36.

As shown in FIG. 10, the control unit 14 determines whether or not a player character 52 (54) that is not set as the operation target of the user is in possession of the ball 56 (S1).

This processing ends when it is not determined that the player character 52 (54) that is not set as the operation target of the user is in possession of the ball 56 (S1; N). In other words, when the player character 52 (54) that is set as the operation target of the user is in possession of the ball 56, or none of the player characters 52 (54) is in possession of the ball 56, the processing ends. In this case, the player character 52 (54) under the control of the computer may be controlled based on a known algorithm.

On the other hand, when it is determined that the player character 52 (54) that is not set as the operation target of the user is in possession of the ball 56 (S1; Y), the control unit 14 obtains information on the operation of the user so as to determine the motion of the operation target of the user (S2). The control unit 14 determines motions of other player characters 52 (54) besides the operation target of the user and the player character 52 (54) in possession of the ball 56 based on the given algorithm (S3).

In S3, motions may be determined based on a known algorithm. For example, a motion of a player character 52 (54) may be determined based on a positional relationship between that player character 52 (54) and the ball 56. The main memory 16 temporarily stores information (e.g., information on destination) indicating motions of the player character 52 (54) whose motions have been determined in S2 and S3.

The control unit 14 defines the surrounding area 62 (64) in the game space 40 with respect to a player character 52 (54) belonging to a team different from the team to which the player character 52 (54) in possession of the ball 56 belongs based on the position of the player character 52 (54) stored in the game situation data (S4).

The control unit 14 defines the conscious area 66 (68) in the game space 40 with respect to a player character 52 (54) belonging to a team different from the team to which the player character 52 (54) in possession of the ball 56 belongs based on the position and the representative direction 74 (76) of the player character 52 (54) stored in the game situation data (S5).

The control unit 14 defines the reserved area 70 (72) in the game space 40 with respect to a player character 52 (54) belonging to a team different from the team to which the player character 52 (54) in possession of the ball 56 belongs based on the position and movement direction 78 (80) of the player character 52 (54) stored in the game situation data (S6). In S6, the reserved area 70 (72) may be set so as to include the position of a destination determined in S2 and S3.

Referring to FIG. 11, the control unit 14 substitutes 1 for a counter variable N (S7). The control unit 14 calculates a distance AN between an evaluation target direction V_{N} of the player character 52 (54) in possession of the ball 56 and the surrounding area 62 (64) of the player character 52 (54) of another team (S8).

The control unit 14 calculates a distance B_{N} between the evaluation target direction V_{N} of the player character 52 (54) and the conscious area 66 (68) of the player character 52 (54) of another team (S9).

The control unit 14 calculates a distance C_{N} between the evaluation target direction V_{N} of the player character 52 (54) and the reserved area 70 (72) of the player character 52 (54) of another team (S10).

In S8-S10, distances A_{N}-C_{N} may be calculated for each of eleven player characters 52 (54) belonging to the team different from the team to which the player character 52 (54) in possession of the ball 56 belongs. Alternatively, distances A_{N}-C_{N} may be calculated for a player character 52 (54) that is located within a predetermined distance from the player character 52 (54) in possession of the ball 56.

The control unit 14 evaluates the evaluation target direction V_{N} based on the distances AN, B_{N}, and C_{N} calculated in S8-S10 (S11). In S11, for example, based on the distances AN, B_{N}, and C_{N}, the evaluation target direction V_{N} is evaluated by determining whether or not the straight line extending from the position of the player character 52 (54) in possession of the ball 56 to the evaluation target direction V_{N} is included in the surrounding areas 62 (64), conscious areas 66 (68), or reserved areas 70 (72) of the player characters 52 (54) of another team. In S11, an evaluation point corresponding to the evaluation target direction V_{N} is calculated and stored in the evaluation result data.

The control unit 14 determines if the counter variable N is 8 (S12). That is, it is determined whether or not all of evaluation target directions V_{N} that are set for the player character 52 (54) in possession of the ball 56 have been evaluated.

If the counter variable N is not determined to be 8 (S12; N), the control unit 14 increments N (S13), and the processing returns to S8.

If the counter variable N is determined to be 8 (S12; Y), the control unit 14 determines the motion of the player character 52 (54) in possession of the ball 56 based on the evaluation result data (S14). For example, the player character 52 (54) in possession of the ball 56 is controlled to dribble or pass in the evaluation target direction V_{N} having the highest evaluation point value.

The control unit 14 updates the game situation data based on the motions determined in S2, S3, and S14 (S15). The control unit 14 updates a display of the game screen 60 based on the updated game situation data (S16), and then the processing ends.

According to the game device 10 as explained above, it is possible to control the motion of the player character 52 (54) in possession of the ball 56 based on the surrounding areas 62 (64), conscious areas 66 (68), and reserved areas 70 (72) of the player characters 52 (54) of another team. That is, it is possible to improve the controllability of the motion of the player character 52 (54) with relatively simple processing compared to the conventional processing, while reducing processing burden of the game device 10.

The present invention is not to be limited to the above described embodiment and can be changed as appropriate without departing from the spirit of the invention.
(1) For example, the above embodiment describes the case of determining the motion of the player character 52 in possession of the ball 56 based on the surrounding area 64, conscious area 68, and reserved area 72 of the player character 54 belonging to the opponent team of the user team, to which the player character 52 belongs, but the method for controlling the motion of the player character 52 is not limited to the example of this embodiment.

For example, the motion of the player character 52a in possession of the ball 56 may be determined based on a positional relationship between a position related to the player character 52a in possession of the ball 56 and the surrounding area 62, conscious area 66, and reserved area 70 of a player character 52 belonging to the same user team as the player character 52a.

For example, when a straight line extending from the player character 52a in possession of the ball 56 to an evaluation target direction V_{N} intersects with the surrounding area 62, conscious area 66, and reserved area 70 of a player character 52 (e.g., player character 52b or 52c) belonging to the same user team as the player character 52a, an evaluation point value of the evaluation target direction V_{N} may increase.

In this way, the motion of the player character 52a in possession of the ball 56 is controlled based on the surrounding area 62, conscious area 66, and reserved area 70 of a player character 52 belonging to the same team as the player character 52a in possession of the ball 56 so that the player character 52a in possession of the ball 56 can dribble or pass the ball to the player character 52 of the same team or in the direction which the player character 52 of the same team is conscious of or runs in.
(2) In the above embodiment, for example, the motion of the player character 52 (54) in possession of the ball 56 is controlled based on the surrounding area 62 (64), conscious area 66 (68), and reserved area 70 (72). Alternatively, the motion of a player character 52 (54) which is not in possession of the ball 56 may be controlled based on the surrounding area 62 (64), conscious area 66 (68), and reserved area 70 (72). That is, the motion control unit 106 may control other player characters 52 (54) besides the operation target of the user, regardless of whether or not the player character 52 (54) is in possession of the ball 56.

For example, in a case where the player character 52a is in possession of the ball 56, the motion of a player character 54 of the opponent team may be controlled based on the surrounding area 62, conscious area 66, and reserved area 70 of the player character 52a. For example, when an evaluation target direction V_{N} set for the player character 54 intersects with the surrounding area 62, conscious area 66, and reserved area 70 of the player character 52a in possession of the ball 56, an evaluation point value of the evaluation target direction V_{N} is increased. In this case, the player character 54 moves toward the player character 52a in possession of the ball 56.

For example, when the player character 52a is in possession of the ball 56, motions of other player characters 52 (player characters 52 not in possession of the ball 56) of the user team may be controlled based on the surrounding areas 62 (64), conscious areas 66 (68), and reserved areas 70 (72) of the player character 52a and the player characters 54. For example, when an evaluation target direction V_{N} set for the player character 52 intersects with the surrounding areas 62 (64), conscious areas 66 (68), and reserved areas 70 (72) of the player character 52a and the player characters 54, the evaluation target direction V_{N} is given a lower evaluation point. In this case, the player character 52 moves toward an empty space.
(3) For example, in the above embodiment, evaluation target directions V_{N} are set in 8 directions from the position related to the player character 52 (54). However, the evaluation target directions V_{N} are not limited to the above. The evaluation target directions V_{N} may be, for example, any number of directions. In addition, for example, a direction from a position related to another player character 52 (54) belonging to the same team as the player character 52 (54) toward the surrounding area 62 (64), conscious area 66 (68), or reserved area 70 (72) may be set as an evaluation target direction V_{N}.

The number of evaluation target directions V_{N} may be changed according to an ability (parameter) of a player character 52 (54). In this case, data that associates conditions (e.g., a range of parameter) relating to the ability of the player character 52 (54) with the number of evaluation target directions V_{N} is stored in the game data storage unit 100 in advance. Then, the evaluation target directions V_{N}, the number of which is associated with the ability of the player character 52 (54), are evaluated. For example, in a case of a player character 52 (54) having a relatively high ability and being good at dribbling, the evaluation target directions V_{N} may have 16 directions, not 8 directions. This approach allows the player character 52 (54) having a relatively high ability to dribble through even a narrow space between the surrounding area 62 (64), conscious area 66 (68), or reserved area 70 (72).
(4) For example, sizes of surrounding areas 62 (64), conscious areas 66 (68), and reserved areas 70 (72) may be changed according to a level of the user or the computer. In other words, a difficulty level of a game may be adjusted by changing the sizes of the surrounding areas 62 (64), conscious areas 66 (68), and reserved areas 70 (72).

In this modification, the dominated area setting unit 104 has means for obtaining information from a unit for storing information on strength of the user or the computer operating the game characters (e.g., player character 52 (54)). The information on the strength of the user or the computer is, for example, information indicative of a level of the user or the computer, or information indicative of a difficulty level of the game. The information may be stored in the game data storage unit 100 so as to be specified by a user's operation, or changed according to a result of a play of the user.

Further, the dominated area setting unit 104 includes means for changing sizes of at least two of the first dominated area (e.g., surrounding area 62 (64)), second dominated area (e.g., conscious area 66 (68)), and third dominated area (e.g., reserved area 70 (72)) of the game character (e.g., player character 52 (54)) based on information on the strength of the user or the computer.

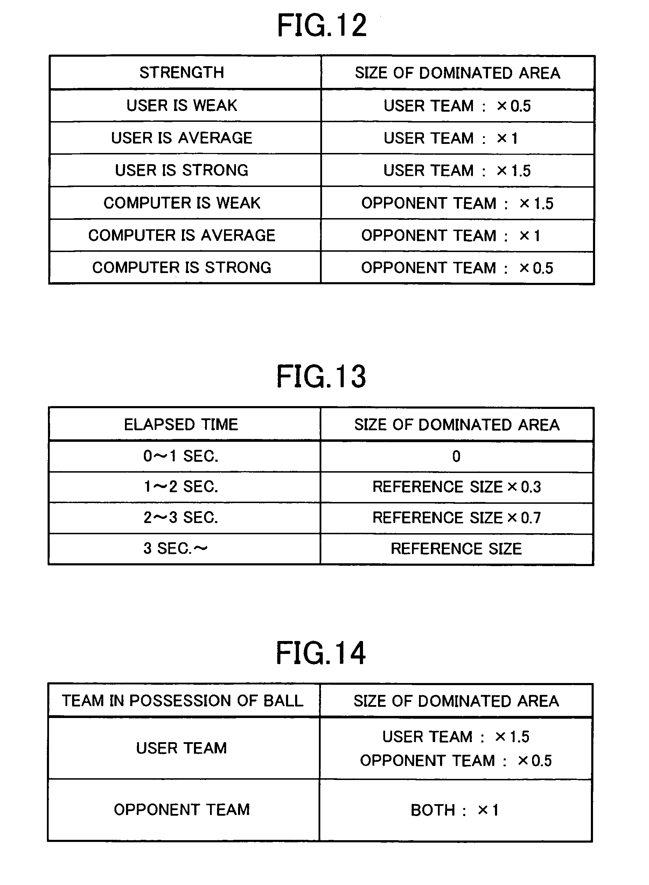

FIG. 12 is a diagram illustrating an association between information on strength of the user or the computer and information indicative of sizes of the surrounding area 62 (64), conscious area 66 (68), and reserved area 70 (72). Data indicative of this association may be stored in, for example, the game data storage unit 100 in advance. The dominated area setting unit 104 reads out information on the strength of the user or the computer from the game data storage unit 100, and changes (sets) the surrounding area 62 (64), conscious area 66 (68), and reserved area 70 (72) based on the size associated with the information.

For example, a stronger user (or a higher level of the user, or higher difficulty of the game) is associated with larger sizes of the surrounding areas 62, conscious areas 66, and reserved areas 70 of the player characters 52 belonging to the user team. Further, for example, a stronger computer (or a higher level computer, or higher game difficulty) is associated with smaller sizes of the surrounding areas 64, conscious areas 68, and reserved areas 72 of the player characters 54 belonging to the opponent team operated by the computer.

For example, in a case where the user is relatively weak, the surrounding areas 62, conscious areas 66, and reserved areas 70 of the player characters 52 of the user team become relatively narrow (small in size). With the narrower areas, the evaluation target direction V_{N} of the player character 54 of the opponent team is less likely to intersect with these areas. As a result, the player character 54 of the opponent team is less likely to approach the player character 52 in possession of the ball, and thus the ball 56 is less likely to be taken. On the other hand, for example, when the user is relatively strong, the surrounding areas 62, conscious areas 66, and reserved areas 70 of the player characters 52 of the user team become relatively wide (large in size). With the wider areas, the evaluation target direction V_{N} of the player character 54 of the opponent team is more likely to intersect with these areas. As a result, the player character 54 is more likely to approach the player character 52 in possession of the ball, and thus the ball 56 is more likely to be taken.

For example, when the computer is relatively weak, the surrounding areas 64, conscious areas 68, and reserved areas 72 of the player characters 54 of the opponent team controlled by this computer become relatively wide (large in size). With the wider areas, the evaluation target direction V_{N} of the player character 52 of the user team is more likely to intersect with these areas. As a result, the player character 52 is more likely to approach the player character 54 in possession of the ball, and thus the ball 56 is more likely to be taken. On the other hand, for example, when the computer is relatively strong, the surrounding area 64, conscious area 68, and reserved area 72 of the player character 54 of the opponent team become relatively narrow (small in size). With the narrower areas, the evaluation target direction V_{N} of the player character 52 of the user team is less likely to intersect with these areas. As a result, the player character 52 is less likely to approach the player character 54 in possession of the ball, and thus the ball 56 is less likely to be taken.

According to the modification (4), the difficulty level of the game can be adjusted by changing sizes of the surrounding areas 62 (64), conscious areas 66 (68), and reserved areas 70 (72) according to the strength of the user or the computer so that, for example, the ball 56 is less likely or more likely to be taken.
(5) For example, sizes of the surrounding areas 62 (64), conscious areas 66 (68), and reserved areas 70 (72) may be gradually changed according to the elapsed time from the time when the player character 52 (54) possesses the ball 56. For example, sizes (e.g., lengths of radius r₁, r₂, and r₃) of the surrounding area 62 (64), conscious area 66 (68), and reserved area 70 (72) may be gradually widened according to the period from the time when the player character 52 (54) possesses the ball 56 up to the present time.

In this modification, the dominated area setting unit 104 includes means for changing sizes of at least two of the first dominated area (e.g., surrounding area 62 (64)), the second dominated area (e.g., conscious area 66 (68)), and the third dominated area (e.g., reserved area 70 (72)) of the game character in a step-by-step manner, based on the elapsed time from the time when one of the plurality of game characters (e.g., player characters 52 (54)) and a moving object (e.g., ball 56) are associated with each other.

FIG. 13 illustrates an association between the elapsed time from the time when the player character 52 (54) possesses the ball 56 and information indicative of sizes of the surrounding area 62 (64), conscious area 66 (68), and reserved area 70 (72). Data indicative of the association may be stored in, for example, the game data storage unit 100 in advance. In this regard, "reference size" shown in FIG. 13 is a predetermined size, for example, a size of a circle having radius r₁, r₂, or r₃.

The dominated area setting unit 104 calculates the elapsed time from the time when the player character 52 (54) possesses the ball 56. In other words, at the time when the player character 52 (54) possesses the ball 56, the dominated area setting unit 104 starts counting the time, and counts up the elapsed time by updating information, which is stored in the main memory 16, for example, indicative of the elapsed time. The dominated area setting unit 104 sets the surrounding area 62 (64), conscious area 66 (68), and reserved area 70 (72) based on, for example, sizes associated with the elapsed time.

For example, in an example of data storage shown in FIG. 13, at the moment the player character 52 (54) possesses the ball 56, the surrounding areas 62 (64), conscious areas 66 (68), and reserved areas 70 (72) of other player characters 52 (54) are not yet defined, and thus it may be possible to dribble or pass in any direction.

As time passes after the player character 52 (54) possesses the ball 56, the surrounding areas 62 (64), conscious areas 66 (68), and reserved areas 70 (72) gradually grow wider. As a result, the evaluation target direction V_{N} of the player character 52 (54) in possession of the ball 56 is likely to intersect with the surrounding areas 62 (64), conscious areas 66 (68), and reserved areas 70 (72) of other player characters 52 (54), and thus it becomes difficult for the player character 52 (54) in possession of the ball 56 to dribble or pass the ball.

The speed with which the surrounding areas 62 (64), conscious areas 66 (68), and reserved areas 70 (72) grow wider may be changed according to information on the strength of the user or the computer. In this case, information on the strength of the user or the computer may be associated with information indicative of the speed with which the surrounding areas 62 (64), conscious areas 66 (68), and reserved areas 70 (72) grow wider and stored in the game data storage unit 100. In this case, the dominated area setting unit 104 gradually expands the surrounding areas 62 (64), conscious areas 66 (68), and reserved areas 70 (72) based on the speed associated with the strength of the computer.
(6) For example, sizes of the surrounding areas 62 (64), conscious areas 66 (68), and reserved areas 70 (72) may be varied between a case where a player character 52 of the user team is in possession of the ball 56 and a case where a player character 54 of the opponent team is in possession of the ball 56.

The dominated area setting unit 104 in this modification includes means for widening or narrowing at least two of the first dominated area (e.g., surrounding area 62 (64)), second dominated area (e.g., conscious area 66 (68)), and third dominated area (e.g., reserved area 70 (72)) of the game character such that the areas are wider or narrower in a case where the game character (e.g., player character 52) of the first team (e.g., user team) is associated with the moving object (e.g., ball 56) than in a case where the game character (e.g., player character 54) of the second team (e.g., opponent team) is associated with the moving object.

FIG. 14 shows an association between the team to which the player character 52 (54) in possession of the ball 56 belongs and sizes of the surrounding area 62 (64), conscious area 66 (68), and reserved area 70 (72). Data indicative of this association may be stored in, for example, the game data storage unit 100 in advance.

The dominated area setting unit 104 determines sizes of the surrounding area 62 (64), conscious area 66 (68), and reserved area 70 (72) based on, for example, a changing method associated with the player character 52 (54) in possession of the ball 56. Information indicative of the changing method for changing sizes of the surrounding area 62 (64), conscious area 66 (68), and reserved area 70 (72) includes, for example, information on a size of each area and information on an amount changed from the reference size.

For example, if the surrounding area 62, conscious area 66, and reserved area 70 of the player character 52 of the user team are made wider in a case where a player character 52 of the user team is in possession of the ball 56 than in a case where a player character 54 of the opponent team is in possession of the ball 56, these areas are more likely to intersect with the evaluation target directions V₁-V₈ of the player character 54 of the opponent team. As a result, the player character 52 in possession of the ball 56 is easily approached by the player characters 54 of the opponent team, and thus easily dispossessed of the ball 56.

On the other hand, in the above case, if the surrounding area 62, conscious area 66, and reserved area 70 of the player character 52 of the user team are made narrow, these areas are less likely to intersect with the evaluation target directions V₁-V₈ of the player character 54 of the opponent team. As a result, the player character 52 in possession of the ball 56 is less likely to be approached by the player character 54 of the opponent team, and thus less likely to be dispossessed of the ball 56.

For example, if the surrounding area 64, conscious area 68, and reserved area 72 of the player character 54 of the opponent team are made wider in a case where a player character 52 of the user team is in possession of the ball 56 than in a case where a player character 54 of the opponent team is in possession of the ball 56, it is more likely for these areas to intersect with the evaluation target directions V₁-V₈ of the player character 52 in possession of the ball 56. Once the evaluation target directions V₁-V₈ intersect with the surrounding area 64, conscious area 68, and reserved area 72, the player characters 54 of the opponent team come to take the ball 56 or intercept a pass. Accordingly, in the above case, it is difficult for the player character 52 in possession of the ball 56 to dribble or pass the ball.

On the other hand, in the above case, if the surrounding areas 64, conscious areas 68, and reserved areas 72 of the player characters 54 of the opponent team are made narrow, these areas are less likely to intersect with the evaluation target directions V₁-V₈ of the player character 52 in possession of the ball 56. If the evaluation target directions V₁-V₈ do not intersect with the surrounding areas 64, conscious areas 68, and reserved areas 72, the player characters 54 of the opponent team will not come to take the ball or intercept a pass. Accordingly, in the above case, it will be easier for the player character 52 in possession of the ball 56 to dribble or pass the ball.
(7) For example, sizes of the surrounding area 62 (64), conscious area 66 (68), and reserved area 70 (72) may be varied between a case where the operation target of the user is in possession of the ball 56 and a case where the operation target of the user is not in possession of the ball 56.

In this modification, the dominated area setting unit 104 includes means for widening or narrowing at least two of the first dominated area (e.g., surrounding area 62 (64)), second dominated area (e.g., conscious area 66 (68)), and third dominated area (e.g., reserved area 70 (72)) of the game character such that the areas are made wider or narrower in a case where the operation target of the user is associated with the moving object (e.g., ball 56) than in a case where a game character other than the operation target of the user is associated with the moving object.

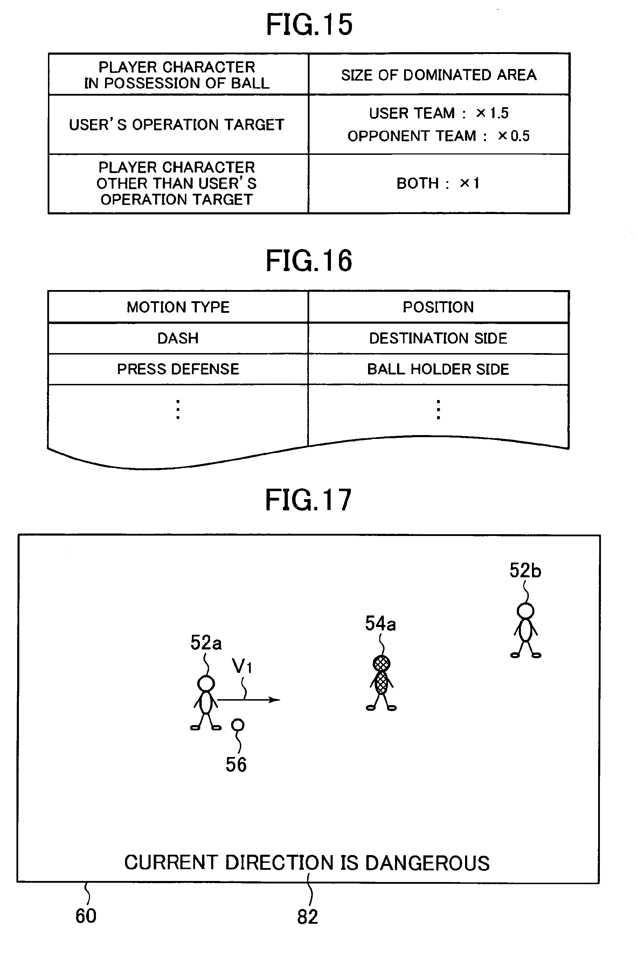

FIG. 15 illustrates an association between the player character 52 (54) in possession of the ball 56 and sizes of the surrounding area 62 (64), conscious area 66 (68), and reserved area 70 (72). Data indicative of the association may be stored in, for example, the game data storage unit 100 in advance.

The dominated area setting unit 104 specifies the player character 52 (54) in possession of the ball 56 with reference to the game situation data, and changes sizes of the surrounding area 62 (64), conscious area 66 (68), and reserved area 70 (72) based on the size associated with the specified player character 52 (54).

For example, if the surrounding area 62, conscious area 66, and reserved area 70 of the player character 52 are made wider in a case where the operation target of the user is in possession of the ball 56 than in a case where a player character other than the operation target of the user is in possession of the ball 56, these areas are more likely to intersect with the evaluation target directions V₁-V₈ of the player character 54 of the opponent team, and thus the player character 54 can take the ball 56 more easily.

Further, for example, if the surrounding area 62, conscious area 66, and reserved area 70 of the player character 52 are made narrower in a case where the operation target of the user is in possession of the ball 56 than in a case where a player character other than the operation target of the user is in possession of the ball 56, these areas are less likely to intersect with the evaluation target directions V₁-V₈ of the player character 54 of the opponent team, and thus the player character 54 has more difficulty in coming to take the ball 56.

For example, if the surrounding area 64, conscious area 68, and reserved area 72 of the player character 54 are made narrower in a case where the operation target of the user is in possession of the ball 56 than in a case where a player character other than the operation target of the user is in possession of the ball 56, these area are less likely to intersect with the evaluation target directions V₁-V₈ of the player character 52, and thus the player character 52 can find an empty space more easily.

For example, if the surrounding area 64, conscious area 68, and reserved area 72 of the player character 54 are made wider in a case where the operation target of the user is in possession of the ball 56 than in a case where a player character other than the operation target of the user is in possession of the ball 56, these areas are more likely to intersect with the evaluation target directions V₁-V₈ of the player character 52, and thus the player character 52 has more difficulty in finding an empty space.
(8) For example, positions of the surrounding area 62 (64), conscious area 66 (68), and reserved area 70 (72) may be varied depending on a type of motion of the player character 52 (54). For example, the surrounding area 62 (64), conscious area 66 (68), and reserved area 70 (72) may be displaced further in the movement direction in a case where the player character 52 (54) is making a dash than in a case where the player character 52 (54) is walking.

FIG. 16 illustrates an association between information on types of motion of the player character 52 (54) and information on the positions of the surrounding area 62 (64), conscious area 66 (68), and reserved area 70 (72). Data shown in FIG. 16 may be stored in the game data storage unit 100 in advance. Information on the types of motion to be stored includes information indicative of the type of current or past (immediately previous) motion of the player character 52 (54). For example, the player character 52 (54) performs one of a plurality of predetermined types of motion. Data indicative of the plurality of types of motion may be stored in the game data storage unit 100 in advance.

The dominated area setting unit 104 obtains a type of motion of the player character 52 (54) by referring to the game situation data and then comparing the type of motion with the predetermined type of motion. The positions of the surrounding area 62 (64), conscious area 66 (68), and reserved area 70 (72) may be varied by setting the surrounding area 62 (64), conscious area 66 (68), and reserved area 70 (72) based on information on the positions of the surrounding area 62 (64), conscious area 66 (68), and reserved area 70 (72) associated with the obtained type of motion. For example, if a type of a current motion of a player character 52 (54) indicates "dash", the surrounding area 62 (64), conscious area 66 (68), and reserved area 70 (72) may be displaced in a movement direction 78(80) of the player character 52 (54).

According to this modification, the surrounding area 62 (64), conscious area 66 (68), and reserved area 70 (72) can be placed at the optimum position according to the motion of the character 52 (54), and thus it is possible to further improve the controllability of the motion of the player character 52 (54).
(9) For example, an evaluation target direction V_{N} indicated by a direction instruction operation, which is input by the user through the controller 30, may be evaluated to display the evaluation result on the game screen 60. That is, for example, when, through the controller 30, the user instructs the player character 52 in possession of the ball 56 to move in an XW-axis direction, the game screen 60 may display whether or not there are the surrounding area 64, conscious area 68, and reserved area 72 of the player character 54 of the opponent team in this direction. It is described herein that the user can indicate one of the evaluation target directions V_{N} through the controller 30.

The game executing unit 102 of this modification evaluates the direction indicated by the direction instruction operation of the user based on a positional relationship between the position related to the operation target (e.g., player character 52 (54)) of the user and at least two of the first dominated areas (e.g., surrounding area 62 (64)), second dominated areas (e.g., conscious area 66 (68)), and third dominated areas (e.g., reserved area 70 (72)) of other game characters, and presents the evaluation result to the user.

The evaluation result may be presented (notified) by a display on the game screen 60 or sounds from the audio output unit 34. Alternatively, for example, a vibrator may be provided in the controller 30 so as to present the evaluation result by means of vibration.

The evaluation method of the evaluation target direction V_{N} indicated by the direction instruction operation of the user is the same as the embodiment. That is, the evaluation target direction V_{N} is evaluated based on whether or not the straight line extending from the position related to the operation target of the user in the direction indicated by the direction instruction operation intersects with the surrounding area 62 (64), conscious area 66 (68), and reserved area 70 (72).

FIG. 17 illustrates how the evaluation result of the direction indicated by the direction instruction operation of the user is presented. FIG. 17 describes a case of setting a player character 52a as the operation target of the user and performing the direction instruction operation so that the player character 52a dribbles the ball in the evaluation target direction V₁. For example, an evaluation result image 82 is displayed based on an evaluation point obtained by evaluating the evaluation target direction V₁.

According to this modification, it is possible to present the evaluation result of the user's direction instruction operation to the user. In this way, when the user operates the operation target to dribble or pass the ball, the user can know whether or not other player characters 52 (54) are placed in the direction indicated by the direction instruction operation.
(10) For example, the game screen 60 may display the evaluation result of the evaluation target direction V_{N} so as to present the user with a direction in which the ball 56 is highly likely to be taken or a direction in which the ball 56 is relatively less likely to be taken.

The game executing unit 102 of this modification determines a direction that should be instructed or not be instructed by the direction instruction operation of the user based on a positional relationship between a position related to the operation target of the user and at least two of the first dominated areas (e.g., surrounding areas 62 (64)), second dominated areas (e.g., conscious areas 66 (68)), and third dominated areas (e.g., reserved areas 70 (72)) of other game characters (e.g., player characters 52 (54)), and presents the direction that should be instructed or not be instructed to the user.

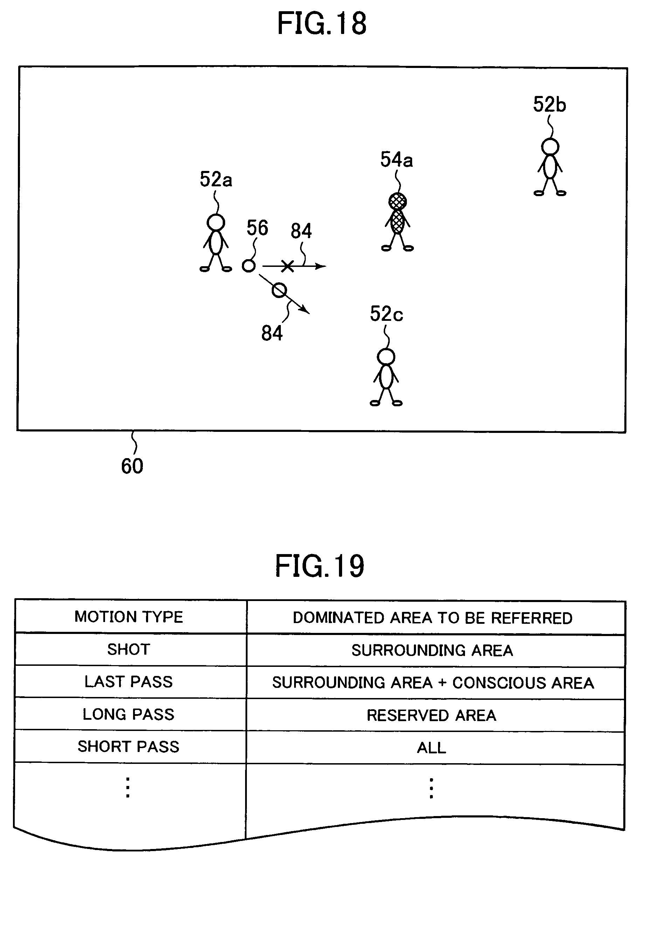

FIG. 18 illustrates how the evaluation result of the evaluation target direction V_{N} is presented. FIG. 18 describes the case of setting the player character 52a as the operation target of the user. For example, the evaluation result is presented to the user by referring to the evaluation result data. Display forms of evaluation presenting images 84 are varied depending on the evaluation point of the evaluation target direction V_{N} set for the player character 52a.

For example, information indicative of the evaluation result of the evaluation target direction V_{N} of the operation target of the user may be associated with information indicative of a method for presenting the evaluation result to the user, for example, information indicative of an image that should be displayed, and stored in the game data storage unit 100. For example, the evaluation result of the evaluation target direction V_{N} is obtained by referring to the evaluation result data, and the evaluation result of the evaluation target direction V_{N} is presented based on the presentation method associated with the obtained evaluation result.

According to this modification, a direction in which the operation target of the user should move or pass the ball can be presented to the user with relatively easy processing.
(11) For example, the surrounding area 62 (64), conscious area 66 (68), and reserved area 70 (72), which are referred to when evaluating the evaluation target direction V_{N}, may be varied depending on a type of motion performed by the player character 52 (54).

FIG. 19 illustrates an association between a type of motion of the player character 52 (54) and information on the surrounding area 62 (64), conscious area 66 (68), and reserved area 70 (72) for reference in evaluating the evaluation target direction V_{N}. Data shown in FIG. 19 may be stored in the game data storage unit 100 in advance.

For example, the dominated area setting unit 104 refers to the game situation data to obtain a type of current motion of the player character 52 (54). The motion of the player character 52 (54) is controlled based on a positional relationship between the surrounding area 62 (64), conscious area 66 (68), and reserved area 70 (72) associated by the type of motion and the position related to the player character 52 (54). That is, among the surrounding area 62 (64), conscious area 66 (68), and reserved area 70 (72), only the area associated with the current motion serves as a comparison with the position related to the player character 52 (54).

For example, when the player character 52 (54) passes a ball in a normal way, all of the surrounding area 62 (64), conscious area 66 (68), and reserved area 70 (72) are to be compared with the position of the player character 52 (54). On the other hand, for example, when the player character 52 (54) shoots, only the surrounding area 62 (64) is to be compared with the position of the player character 52 (54).

According to this modification, the surrounding area 62 (64), conscious area 66 (68), and reserved area 70 (72) to be compared with the position of the player character 52 (54) may be changed according to the motion of the player character 52 (54) so as to evaluate the evaluation target direction V_{N}.
(12) The embodiment mentioned above describes the case in which, for example, the surrounding area 62 (64), conscious area 66 (68), and reserved area 70 (72) are formed in circular shape, but the shape of the surrounding area 62 (64), conscious area 66 (68), and reserved area 70 (72) are not limited to the above. The surrounding area 62 (64), conscious area 66 (68), and reserved area 70 (72) may be formed in any predetermined shape, for example, a three-dimensional shape such as a sphere.
(13) For example, the game space 40 is described as a three-dimensional space as shown in FIG. 2, but the game space according to the present invention may be a two-dimensional game space in which, for example, positions of the player characters 52 (54) or the ball 56 are controlled by two coordinate elements.
(14) For example, the present invention is applicable to a game device for executing sports games other than a soccer game. That is, the present invention is applicable to a game where game characters move around in a game space. For example, the present invention is also applicable to a game device for executing games such as a basketball game, ice hockey game, or American football game.

Further, the present invention is also applicable to a game device 10 for executing games other than sports games. For example, the present invention is also applicable to a game device for executing games such as an FPS (First Person Shooting) game and role-playing game.

For example, in a case where the present invention is applied to the FPS game or role-playing game where a plurality of game characters move and battle in a game space simulating a battlefield, a plurality of dominated areas are set in the game space similarly to the embodiment and modifications mentioned above.

When applied to the FPS game or the role-playing game, the present invention can provide a highly improved strategy game, since the game device is capable of, for example, detecting a place where fewer enemies are placed and controlling motions of game characters so as to avoid attacks from the enemies.

While there have been described what are at present considered to be certain embodiments of the invention, it will be understood that various modifications may be made thereto, and it is intended that the appended claims cover all such modifications as fall within the true spirit and scope of the invention.

## Claims

1. A game device for executing a game where a plurality of game characters move around in a game space, the game device comprising:
dominated area setting means for setting, for each of the plurality of game characters, in the game space, at least two of a first dominated area including a position of each of the plurality of game characters, a second dominated area including a position defined according to a position and a representative direction of each of the plurality of game characters, and a third dominated area including a position defined according to a position and a movement direction of each of the plurality of game characters; and
motion control means for controlling a motion of at least one of the plurality of game characters based on a positional relationship between a position related to the at least one of the plurality of game characters and at least two of the first dominated areas, the second dominated areas, and the third dominated areas of other game characters.

2. The game device according to claim 1,
wherein the motion control means controls a motion of at least one of the plurality of game characters based on a positional relationship between a position of the at least one of the game characters and at least two of the first dominated areas, the second dominated areas, and the third dominated areas of other game characters.

3. The game device according to claim 1 or 2,
wherein the game is a sports game using a moving object, wherein the game device further comprises means for associating one of the plurality of game characters with the moving object based on a positional relationship between positions of the plurality of game characters and a position of the moving object,
wherein the motion control means controls a motion of the game character associated with the moving object based on a positional relationship between a position of the game character or a position of the moving object and at least two of the first dominated areas, the second dominated areas, and the third dominated areas of other game characters.

4. The game device according to claim 1 to 3,
wherein the dominated area setting means comprises:
means for obtaining information from means for storing information indicative of strength of a user or a computer, the user or the computer operating the game character; and
means for changing sizes of at least two of the first dominated area, the second dominated area, and the third dominated area of the game character based on the information indicative of the strength of the user or the computer.

5. The game device according to claim 1 to 4,
wherein the game is a sports game using the moving object,
wherein the game device further comprises means for associating one of the plurality of game characters with the moving object based on a positional relationship between positions of the plurality of game characters and a position of the moving object,
wherein the dominated area setting means comprises means for gradually changing, based on a period of time elapsed since one of the plurality of game characters was associated with the moving object, sizes of at least two of the first dominated area, the second dominated area and the third dominated area of the each of the plurality of game characters.

6. The game device according to claim 1 to 5,
wherein the game is a sports game in which a first team plays against a second team using a moving object,
wherein the game device further comprises means for associating one of the plurality of game characters and the moving object based on a positional relationship between positions of the plurality of game characters and a position of the moving object,
wherein the dominated area setting means comprises means for widening or narrowing at least two of the first dominated area, the second dominated area, and the third dominated area of the each of the plurality of game characters such that the areas are wider or narrower in a case where the game character of the first team is associated with the moving object than in a case where the game character of the second team is associated with the moving object.

7. The game device according to claim 1 to 6,
wherein the game is a sports game using a moving object,
wherein the game device further comprises means for associating one of the plurality of game characters and the moving object based on a positional relationship between positions of the plurality of game characters and a position of the moving object,
and wherein the dominated area setting means comprises means for widening or narrowing at least two of the first dominated area, the second dominated area, and the third dominated area of the each of the plurality of game characters such that the areas are wider or narrower in a case where an operation target of the user is associated with the moving object than in a case where the game character other than the operation target of the user is associated with the moving object.

8. The game device according to claim 1 to 7,
wherein the dominated area setting means comprises means for changing at least two of the positions of the first dominated area, the second dominated area, and the third dominated area of the each of the plurality of game characters based on a type of a motion of the each of the plurality of game characters.

9. The game device according to claim 1 to 8,
wherein the game device further comprises:
means for detecting a direction instruction operation of a user; and
means for evaluating a direction indicated by the direction instruction operation of the user based on a positional relationship between a position related to an operation target of the user and at least two of the first dominated areas, the second dominated areas, and the third dominated areas of other game characters and presenting the evaluation result to the user.

10. The game device according to claim 1 to 9,
wherein the game device further comprises
means for detecting a direction instruction operation of a user; and
means for determining a direction that should be instructed or not be instructed by the direction instruction operation of the user based on a positional relationship between a position related to an operation target of the user and at least two of the first dominated areas, the second dominated areas, and the third dominated areas of other game characters, and presenting to the user the direction that should be instructed or not be instructed.

11. A method for controlling a game device which executes a game where a plurality of game characters move around in a game space, the method comprising the steps of:
setting, for each of the plurality of game characters, in the game space, at least two of a first dominated area including a position of the each of the plurality of game characters, a second dominated area including a position defined according to a position and a representative direction of the each of the plurality of game characters, and a third dominated area including a position defined according to a position and a movement direction of the each of the plurality of game characters; and
controlling a motion of at least one of the plurality of game characters based on a positional relationship between a position related to the at least one of the plurality of game characters and at least two of the first dominated areas, the second dominated areas, and the third dominated areas of other game characters.

12. A program for causing a computer to function as a game device which executes a game where a plurality of game characters move around in a game space, the program causing the computer to function as:
dominated area setting means for setting, for each of the plurality of game characters, in the game space, at least two of a first dominated area including a position of the each of the plurality of game characters, a second dominated area including a position defined according to a position and a representative direction of the each of the plurality of game characters, and a third dominated area including a position defined according to a position and a movement direction of the each of the plurality of game characters; and
motion control means for controlling a motion of at least one of the plurality of game characters based on a positional relationship between a position related to the at least one of the plurality of game characters and at least two of the first dominated areas, the second dominated areas, and the third dominated areas of other game characters.

13. A computer-readable information storage medium for storing the program according to claim 12.
